# EUROPEAN PATENT SPECIFICATION

(11) **EP 2 400 246 B1**
(45) Date of publication and mention of the grant of the patent: **28.08.2013**
(21) Application number: 11171193.3
(22) Date of filing: 23.06.2011
(51) Int. Cl.: F27D 25/00, B08B 1/00, B08B 1/04, B21B 28/04, B24B 5/36, B65G 45/10, C03B 35/16

(54) **Apparatus for treating rollers**
Vorrichtung zur Behandlung von Rollen
Appareil pour traiter des rouleaux

(30) Priority: 24.06.2010 IT MO20100189
(43) Date of publication of application: 28.12.2011
(73) Proprietor: Eurotech Way S.R.L., 42013 Casalgrande (RE) (IT)
(72) Inventor: Grappi, Francesco, 42014 Roteglia (RE) (IT)
(74) Representative: Crugnola, Pietro

(56) References cited:
- US-A- 4 208 754
- US-A- 4 767 438
- US-A- 5 853 318
- US-A- 5 884 751

## Description

The invention relates to an apparatus for treating rollers, in particular melted silica rollers used in a kiln for heat treatment of a material, for example for tempering a vitreous material.

The vitreous material is processed inside the kiln in such a way as to obtain for example a plurality of sheets therefrom. The sheets of vitreous material are heated inside the kiln, for example up to the tempering temperature, and subsequently rapidly cooled, for example by means of jets of a fluid, in particular of air. In this manner the surface layers of the sheets are cooled, causing hardening, whilst the inner part remains hot longer.

In order to move the sheets of vitreous material, the latter are arranged resting on roller conveying devices and are made to slide on the latter once they are rotated. Such rollers are then used as supporting and conveying means of the sheets of vitreous material.

Whilst the sheets of vitreous material are made to slide on the rollers, it is possible that particles of vitreous material remain attached to an external surface of each roller with which they come into contact.

The rollers, in fact, are also located in zones of the kiln in which the temperature is such that the sheets of vitreous material are not yet hardened.

This may cause that the particles of vitreous material that have stuck to the external surfaces of the rollers create asperities on the surface of the rollers, damaging, and, in particular, scratching, the sheets of vitreous material obtained during a processing cycle.

In the same manner, the dust that is inevitably present inside the kiln can dirty the rollers and damage the sheets of vitreous material that are produced inside the kiln and slide on the rollers.

Consequently, periodical maintenance operations must be conducted on the aforesaid rollers, such as cleaning and/or lapping treatment, to restore the external surface of the rollers to an optimum state for conveying the sheets of vitreous material.

In order to perform the aforesaid maintenance operations, it is necessary to stop kiln operation so as to lower the temperature thereof and to enable the assigned personnel, in particular at least two assigned workers, to extract each roller from the conveying device, one after the other.

Once the rollers are extracted, the assigned workers subject the rollers to cleaning and/or lapping and subsequently rearrange them in the conveying device.

The maintenance operations are thus very laborious and rather lengthy.

This entails a reduction in productivity of the kiln and high maintenance costs inasmuch as it has to be set up by assigned personnel, in the extent of at least two assigned workers, to handle and clean the rollers without damage thereto.

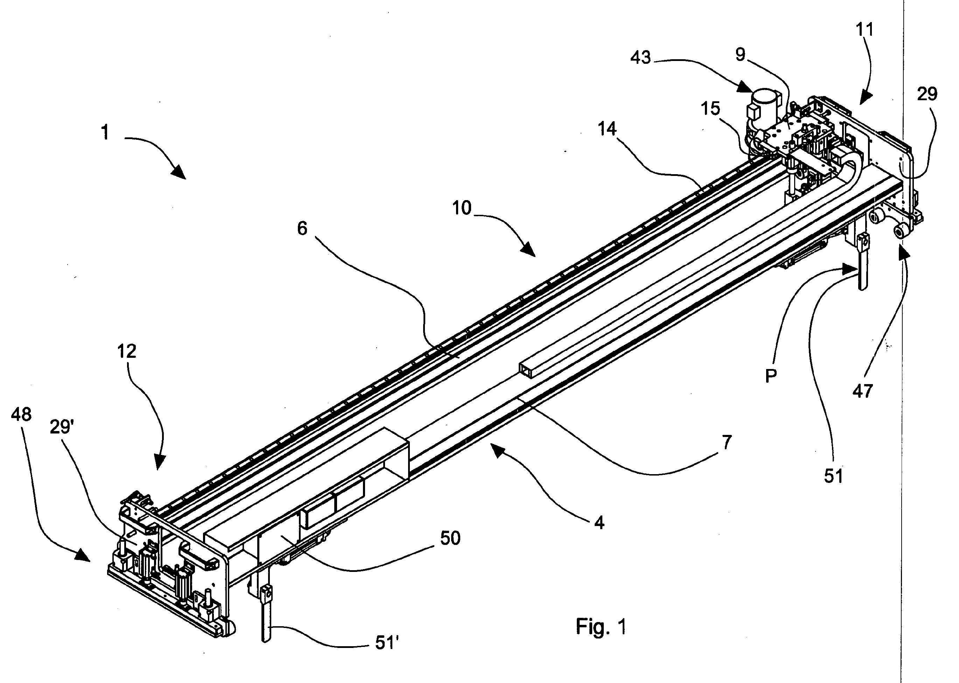

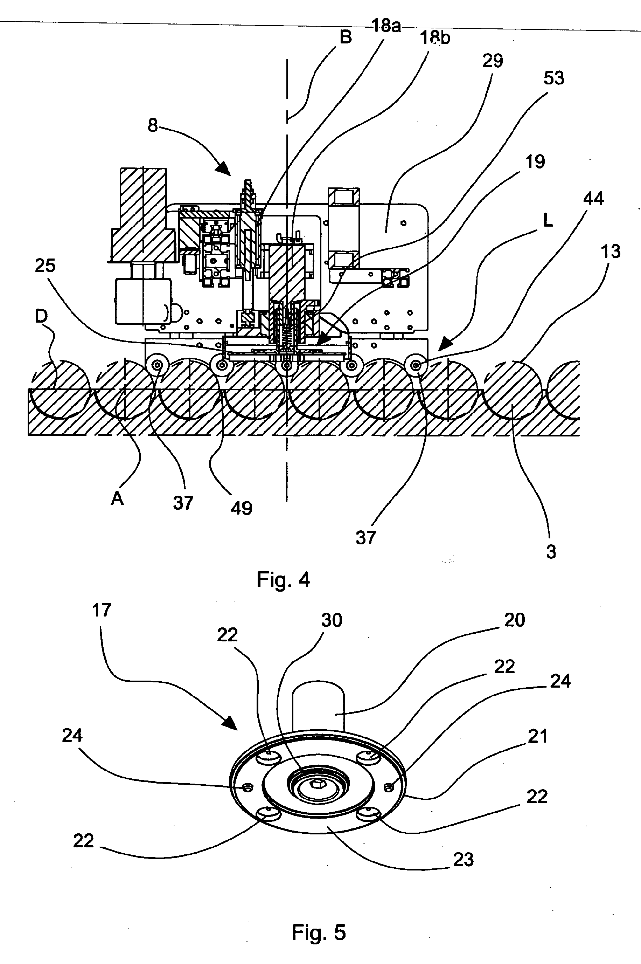

US 4767438 discloses an apparatus for treating rollers suitable for subjecting to a maintenance operation rollers of a conveying device for eliminating impurities and encrustations from an external surface of the rollers. The apparatus comprises cleaning means for cleaning the external surface of the rollers and locking means suitable for maintaining the apparatus in a fixed position resting on the conveying device when rollers are rotated around respective rotating axes, whereby the locking means comprises freely rotatable revolving elements that is suitable for being inserted between adjacent pairs of rollers (figures 1 and 4). Displacement of the apparatus from a roller of the conveying device to another roller must be effected manually. This implies that maintenance operations are very laborious and rather costly.

An object of the invention is to provide an apparatus for treating rollers, in particular the rollers of a conveying device located in a kiln, for example in a kiln for tempering a vitreous material, that enables the maintenance operations to be speeded up that are to be performed.

Another object is to obtain an apparatus for treating rollers that does not require assigned personnel to maintaining the rollers.

A further object is to obtain an apparatus for treating rollers that is simple and cheap.

According to the invention, an apparatus is provided for treating rollers as defined in claim 1.

Owing to the apparatus for treating rollers according to the invention, the maintenance operations are speeded up and it is not necessary to provide assigned personnel to perform the maintenance operations, inasmuch as the maintenance operations on the rollers are performed without having to dismantle the rollers.

Further, the apparatus for treating rollers according to the invention enables the maintenance operations to be performed easily, also if they have to involve only a portion of the rollers of the conveying device. In this manner the production efficiency of the sheets obtained from vitreous material is increased.

The invention can be better understood and implemented with reference to the attached drawings, which illustrate an embodiment thereof by way of non-limiting example, in which:
Figure 1 is a perspective top view of an apparatus for treating rollers according to the invention;
Figure 2 is a perspective bottom view of the apparatus for treating rollers in Figure 1;
Figure 2A is a partial, enlarged and bottom view of a detail in Figure 2;
Figure 3 is a side view of the apparatus for treating rollers in Figure 1;
Figure 4 is a section taken along a plane IV-IV of Figure 3;
Figure 5 is a perspective bottom view of a supporting head of a cleaning tool with which the apparatus for treating rollers in Figure 1 is provided;
Figure 6 is a section taken along a plane VI-VI in Figure 3;
Figure 7 is a frontal view of a slot element arranged for receiving a locking element with which the apparatus for treating rollers in Figure 1 is provided;
Figure 8 is a top view of Figure 7;
Figure 9 is a side view of Figure 7;
Figure 10 is a partial and enlarged view of a detail of Figure 3.

With reference to Figures 1 to 6, there is shown an apparatus for treating rollers 1 that, in use, is fitted above a roller conveying device 2 that enables sheets of vitreous material to be supported and conveyed, which sheets are not illustrated, inside a kiln for tempering vitreous material.

The apparatus for treating rollers 1 is arranged for performing maintenance operations on the rollers, such as cleaning or lapping treatment.

The conveying device 2 is supported on a supporting structure 5 and comprises a plurality of rollers 3, arranged alongside one another, having respective rotating axes A that are mutually parallel and perpendicular to an advancing direction of the sheets of vitreous material on the conveying device 2.

Each roller 3 can be made of melted silica.

In particular, in use, the apparatus for treating rollers 1 is rested on a part of the rollers 3 that make up the conveying device 2.

The rollers 3 are spaced away from one another by a gap 49. The apparatus for treating rollers 1 comprises a frame 4, provided with a crosspiece 6 having a length that is substantially similar to that of each roller 3.

The frame 4 may further comprise a further crosspiece 7 arranged parallel to the crosspiece 6 and also having a length that is substantially similar to that of each roller 3.

The apparatus for treating rollers 1 further comprises cleaning means 8 arranged for subjecting the rollers 3 to a cleaning and/or lapping treatment.

In particular, the apparatus for treating rollers 1 subjects to the cleaning and/or lapping treatment part of the rollers 3 at a time, as will be explained better below. After cleaning and/or lapping a first part of the rollers 3, the apparatus for treating rollers 1 is translated to subject a further part of the rollers 3, arranged, for example, next to the aforesaid part of the rollers 3 to the cleaning and/or lapping treatment.

The cleaning means 8 comprises a carriage 9 that is movable between a first end 11 of the apparatus for treating rollers 1 and a second end 12 of the apparatus for treating rollers 1 opposite the first end 11.

The first end 11 and the second end 12 are placed substantially near respective ends of each roller 3 when the apparatus for treating rollers 1 is mounted on the conveying device 2. In this manner, in use, the cleaning means 8 can interact with a portion of an external surface 13 of each roller 3.

The carriage 9 slides along translating means 10 arranged, for example, on the crosspiece 6, so as to move the cleaning means 8 along the entire length of each roller 3.

The translating means 10 can comprise a guide 14, for example a belt, arranged along the length of the crosspiece 6 and with which a slide 15 of the carriage 9 is slidingly coupled.

The translating means 10 can be arranged, alternatively, along the further crosspiece 7.

The translating means 10 further comprises movement means 43 that can comprise a motor, for example a linear motor, or any other device that enables the carriage 9 to be moved in a direction that is substantially parallel to the rotation axes A of the rollers 3 or, alternatively, enables the guide 14 to be moved, dragging the carriage 9 with it.

The movement means 43, by driving the guide 14, enables the carriage 6 to be slided along the length of the rollers 3. The cleaning means 8 further comprises a supporting head 17, shown in detail in Figure 5, that projects towards the conveying device 2 and is movable towards and away from the rollers 3.

The supporting head 17 is movable by first driving means 18a to which it is connected.

The first driving means 18a can comprise a servomotor or a cylinder, for example a pneumatic cylinder, or any other device that enables the supporting head 17 to be moved in a direction that is substantially perpendicular to the external surface 13 of the rollers 3.

The supporting head 17 is arranged for supporting a cleaning tool 19 that, in use, interacts, in particular when the rollers 3 are rotated, with the external surface 13 of the rollers 3.

The supporting head 17 comprises a tubular body 20, that enables connection to the first driving means 18a, and a supporting plate 21, that enables connection to the cleaning tool 19, the supporting plate 21 being fixed to an end 30 of the tubular body 20.

The supporting plate 21 and the tubular body 20 are fixed by welding or by suitable fixing means that is not illustrated. The tubular body 20 can have a substantially cylindrical shape.

The tubular body 20 can be hollow to house an elastic element 53, for example one or more springs, arranged for self-levelling of the cleaning tool 19 on the external surface 13 of the rollers 3.

The supporting plate 21 can have a substantially disc shape. On a lower surface 23 of the supporting plate 21 there is obtained a plurality of seats 22, each arranged for housing a fixing element made of a magnetic material, and having, for example, a disc or pad shape that is suitable for attracting and fixing magnetically the cleaning tool 19.

The seats 22 can be four in number, as shown in Figure 5, but a different number of seats 22 can be provided.

From the lower surface 23 of the supporting plate 21 there project centring pins 24, for example two in number, arranged to be inserted into respective housings, which are not illustrated, of the cleaning tool 19 in order to arrange the latter aligned with the supporting plate 21.

The cleaning tool 19 can have a disc shape.

The cleaning tool 19 comprises a first layer 25, shown in Figure 4, facing, in use, the lower surface 23.

The first layer 25 is made of a material, for example of a metal material, that is able to be attracted by the magnetic element of the supporting head 17 when it is placed near the lower surface 23 of the latter.

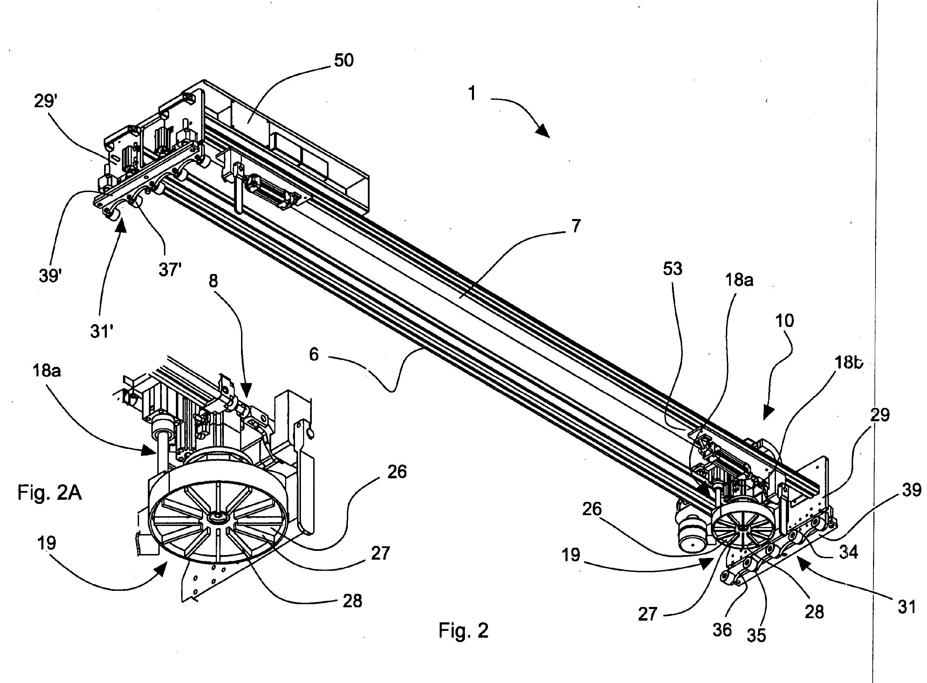

The cleaning tool 19 further comprises a second layer 26, shown in Figure 2, facing, in use, the rollers 3.

The second layer 26 is made of an elastic material, for example rubber, or a silicone material.

According to the dimensions, i.e. width and height, of the second layer 26, in use, the cleaning device 19 enables one or more rollers 3 to be cleaned simultaneously.

In the second layer 26, a plurality of cleaning elements 27 having a substantially parallelepipedon shape can be arranged, shown, in particular, in Figure 2A.

Each cleaning element 27 is partially submerged inside the second layer 26 and partially protrudes from the second layer 26. In particular, each cleaning element 27 comprises at least one edge 28 that projects beyond the second layer 26. The edge 28, after the first driving means 18a has positioned the supporting head 17 near the conveying device 2 and the rollers 3 are rotated, contacts the external surface 13 of each roller 3, exerting a pressure that is such as to eliminate impurities such as particles of vitreous material or of powder, which may be deposited thereupon and spoil the sheets of vitreous material produced in the kiln for tempering the glass. The pressure exerted must be simultaneously such as not to damage the external surface 13 of each roller 3.

In order not to spoil the external surface 13, the cleaning elements 27 can be made of a material that flexes in contact with the external surface 13.

The flexibility of the cleaning elements 27 and the elasticity of the second layer 26 prevent the cleaning elements 27 being able to damage the external surface 13 of the rollers 3.

The cleaning elements 27 act in the same way as brushes on the external surface 13 to eliminate the aforesaid impurities.

The cleaning elements 27 can be arranged radially in the second layer 26.

The cleaning elements 27 can also be mounted on springs. Alternatively, or in addition - for example in order to perform a lapping treatment on the external surface 13 of the rollers 3 - it is possible to replace the cleaning tool 19 provided with cleaning elements 27, with a further cleaning tool, which is not shown, which is equipped with a further first layer, which is similar to the first layer 25, and with a further second layer having a disc provided with a layer of abrasive material, for example of diamond cloth, that, by rubbing against the external surface 13, eliminates the impurities deposited on the external surface 13 and further polishes the external surface 13 of the rollers 3. In use, once the first driving means 18a has positioned the cleaning tool 19 (or the further cleaning tool) and, in particular, the cleaning elements 27 (or the disc provided with a layer of abrasive material) in contact with a portion of the external surface 13 of the rotated rollers 3, the cleaning tool 19 is also rotated by second driving means 18b around a rotation axis B that is substantially perpendicular to the rotation axis A of the rollers 3.

The second driving means can comprise a reduction gear 18b. Owing to the magnetic fixture, disclosed above, the cleaning tool 19 is connected to the supporting head 17 in a removable manner. This enables the cleaning tool 19 to be replaced and applied to the supporting head 17 easily. Further, owing to the centring pins 24, an operator can join and centre the cleaning tool 19 very simply on the supporting head 17.

In fact, the operator has only to position the cleaning tool 19 below the supporting head 17, with the second layer 25 facing the lower surface 23 of the supporting head 17, rotating partially the cleaning tool 19 in such a manner that the housings obtained therein can receive the centring pins 24. Inserting the centring pins 24 is then facilitated by the magnetic attraction between the magnetic material of the supporting head 17 and the first layer 25 of the cleaning tool 19.

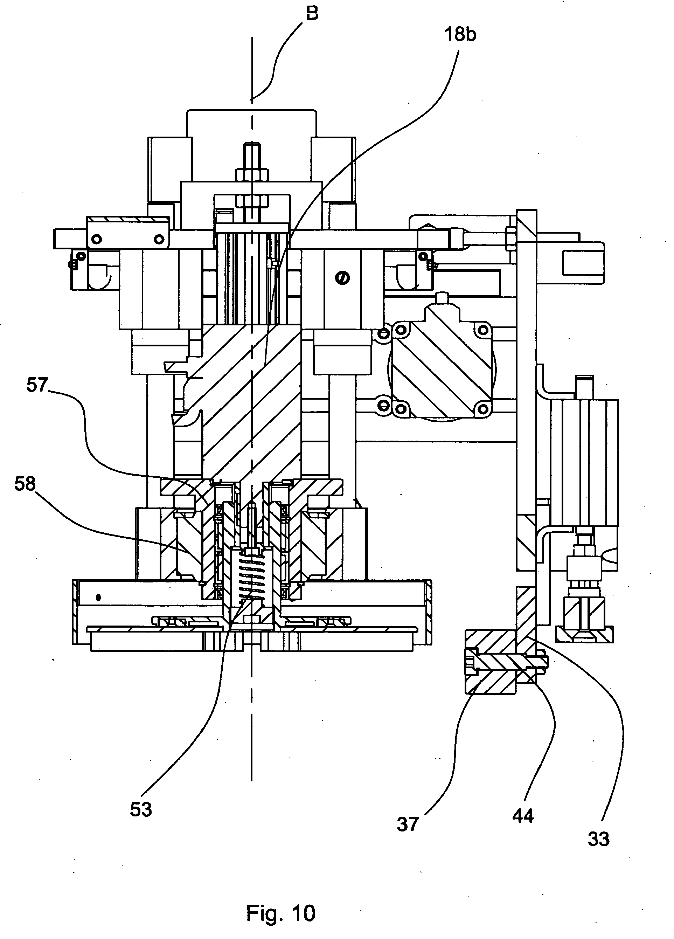

With reference in particular to Figure 10, the second driving means 18b is supported by a first bush 57 inside which the tubular body 20 of the supporting head 17 is rotatingly coupled.

The first bush 57 thus has a symmetry axis that substantially coincides with the rotation axis B of the cleaning tool 19.

Outside the first bush 57 there is arranged a second oscillating bush 58 the symmetry axis of which is partially tiltable with respect to the external surface 13 of the rollers 3.

The second bush 58 enables the pressure exerted by the cleaning tool 19 to be made uniform on the external surface 13 of the rollers 3 when the cleaning tool 19 is slightly tilted with respect to the horizontal, due to the encrustations on the external surface 13 of the rollers 3, or due to the slight differences in diameter between adjacent rollers. In this manner the cleaning tool 19 can be prevented from exerting excessive pressure on some zones of the rollers 3, damaging the zones.

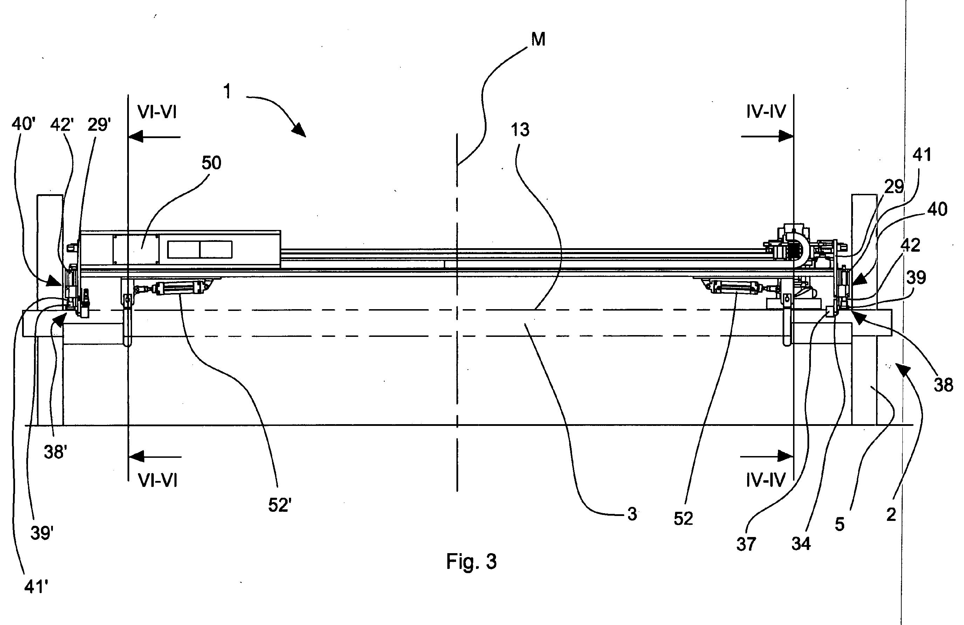

A main plane, indicated by line M in Figure 3 and orthogonal to the external surface 13 of the rollers 3, divides the apparatus for treating rollers 1 into two operating zones, a first operating zone 47 arranged near the first end 11 of the apparatus for treating rollers 1 and a second operating zone 48 arranged near the second end 12 of the apparatus for treating rollers 1, the first operating zone 47 and the second operating zone 48 being arranged on opposite sides with respect to said main plane M.

The first operating zone 47 and the second operating zone 48 are substantially symmetrical with respect to the main plane M, and operate, for example, specularly and simultaneously. For the sake of brevity and for reasons of clarity the structure and operation of only the first operating zone 47 will be disclosed below, they being substantially the same as those of the second operating zone 48.

The components of the second operating zone 48 are similar to those of the first operating zone 47 and will be indicated by the same reference numbers with the addition of an apex.

The frame 4 further comprises a connecting plate 29, that connects the crosspiece 6 to the further crosspiece 7 near the first end 11.

The connecting plate 29 is arranged transversely with respect to the crosspiece 6 and the further crosspiece 7. The connecting plate 29 has a substantially sheet shape and is arranged at a height with respect to the external surface 13 of the rollers 3 that is such as not to interact with the rollers 3 when the apparatus for treating rollers 1 is located on the rollers 3.

Locking means 31 extends from the connecting plate 29 downwards, i.e. towards the rollers 3.

The locking means 31 is arranged for locking the frame 4 on the conveying device 2, in such a manner that the carriage 6 and the cleaning tool 19 can be driven to act on the external surface 13 of the rollers 3 in a stable manner, i.e. in such a way as to avoid or minimise movements, for example oscillations, that the movement of the carriage 6 and/or of the cleaning tool 19 can cause during operation thereof.

The locking means 31 comprises a bar 33, which is also substantially perpendicular to the crosspiece 6 and to the further crosspiece 7.

The bar 33 is connected to the connecting plate 29 by connecting means 32, which can comprise bolts, nuts, screws or similar connecting means that enable the bar 33 to be fixed stably to the connecting plate 29.

A lower edge 34 of the bar 33 is shaped in such a manner as to reproduce a succession of protrusions 34 and recesses 35, as shown in particular in Figure 2. This profile enables the bar 33, once it has been brought near the conveying device 2, to approach closely to the external surface 13 of a part of the rollers 3 of the conveying device 2.

At each protrusion 35 a pin 44 is connected around which a respective locking element 37 can rotate comprising a freely rotatable revolving element, for example a locking wheel.

A portion of each locking wheel 37 protrudes beyond the lower edge 34.

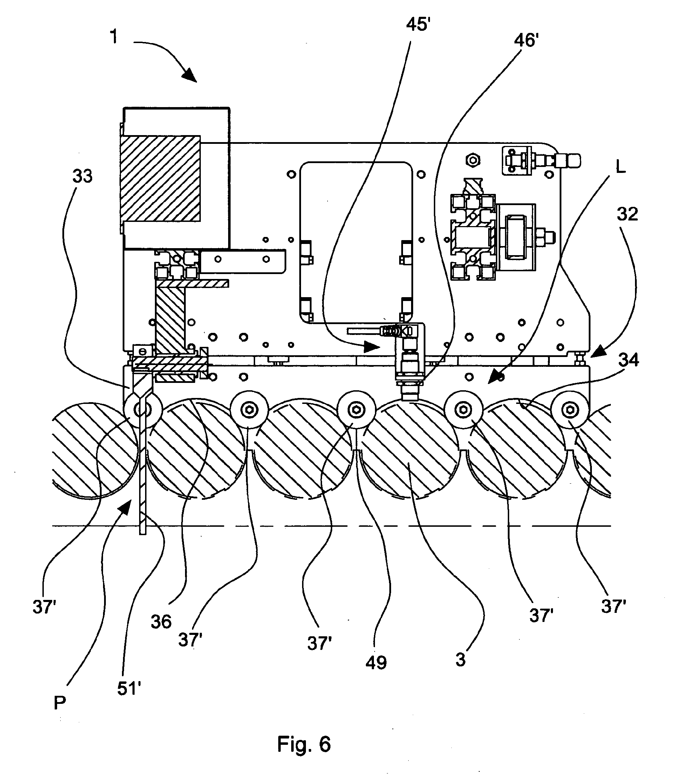

The locking wheels 37 are, for example, five, as shown in Figures 4 and 6.

When the locking means 31 is brought near a part of the rollers 3, in the manner that will be explained better below, each locking wheel 37 is inserted partially between a roller 3 and a further roller 3 next to the aforesaid roller 3 along the conveying device 2, and the recesses 36 are approached closely to a portion of the external surface 13 of the rollers 3 contacted by the locking wheels 37.

In particular, the rollers 3 which are contacted by the locking wheels 37, are equal in number to the locking wheels 37 plus one.

The distance between one protrusion 35 and those placed adjacent to that protrusion 35 must be substantially similar to a diameter D of each roller 3.

The locking wheels 37, being inserted between pairs of adjacent rollers 3, enable the frame 4 of the apparatus for treating rollers 1 to be coupled stably with the conveying device 2. As a result, the cleaning means 8 maintains a substantially stable position with respect to the rollers 3 during operation thereof and can focus the cleaning and/or lapping treatment on a determined zone of the external surface 13 of the rollers 3, making the cleaning and/or lapping treatment significantly effective.

Each pin 44 of the respective locking wheel 37 can be fixed stably to the bar 33 in a determined position or be connected to the bar 33 in such a manner as to be able to move in a direction that is parallel to the external surface 13 of the rollers 3.

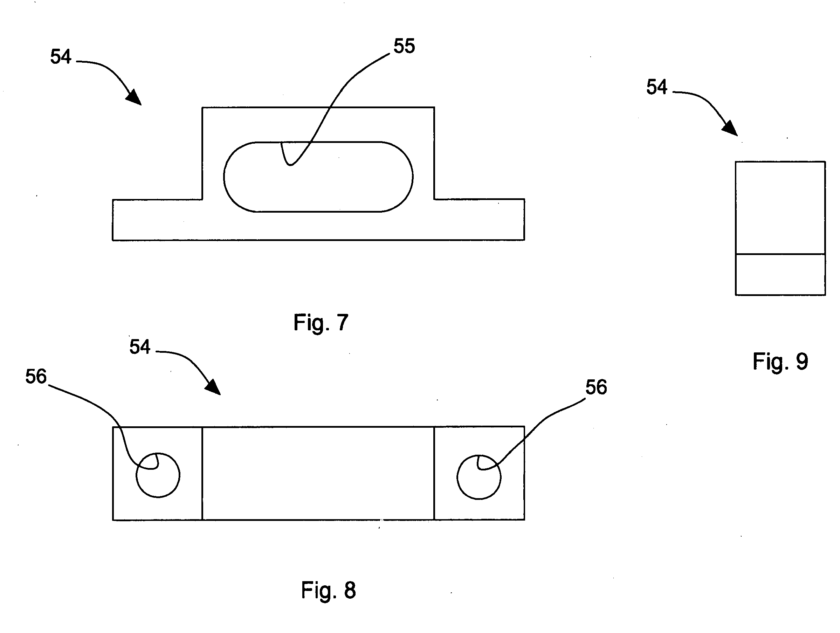

With reference to Figures 7 to 9, in fact, a plurality of slot elements 54 can be connected to the bar 33 by means of fixing means that is not shown, each slot element 54 being provided with a slot 55 inside which a respective pin 44 can slide.

In the slot element 54 holes 56 can be obtained that are suitable for enabling the passage of the fixing means.

The slots 55 enable the pins 44 to move for being inserted correctly between one roller 3 and those adjacent thereto, compensating any distance variations between pairs of adjacent rollers 3.

Preferably, the locking wheel 37 that is in the median position in the bar 33 has the pin 44 fixed in a set position whilst the other locking wheels 37 have the pin 44 that can move inside the respective slots 55.

To the connecting plate 29 lifting means 38 is further connected that is arranged for resting on the external surface 13 of a part of the rollers 3 and lifting the frame 4, together with the locking wheels 37, moving the latter away from the rollers 3.

The lifting means 38 comprise a pair of pads 39, 39', each having a substantially parallelepipedon shape. The pads 39 are movable in a direction that is perpendicular to the surface of the rollers 3 between a first non-operating position and a second operating position in which they lift the apparatus 1 lifted with respect to the rollers 3 in such a manner that the locking wheels 37 are no longer in contact with the rollers 3.

The lifting means 38 comprises actuating means 40 that connects the lifting means 38 to the connecting plate 29. The actuating means 40 can comprise one or more cylinders 41, provided with respective pistons 42 that are slidable inside the cylinders 41.

The actuating means 40, by pushing the pads 39, 39' downwards, causes the apparatus 1 to lift, which determines moving away of the locking wheels 37 from the rollers 3, after cleaning and/or lapping treatment has been performed on a group of rollers 3, in such a manner as to enable the apparatus 1 to move along the rollers 3, exploiting movement thereof, until it is positioned at a subsequent group of rollers 3 on which another cleaning and/or lapping treatment has to be performed.

Each piston 42 can take on an extended configuration, in which it protrudes at least partially outside the respective cylinder 41, and a retracted configuration R, shown, for example, in Figure 3, in which it is received inside the respective cylinder 41.

When each piston 42 is taken from the retracted configuration R to the extended configuration, the pad 39 exerts force on the external surface 13 of the rollers 3, and the connecting plate 29, together with the bar 33 and with the locking wheels 37, is, thus, moved away from the contact position with the rollers 3.

When the pistons 42 are in the extended configuration, the apparatus for treating rollers 1 can move along the conveying device 2 by exploiting the rotation of the rollers 3.

The rotation of the rollers 3, driven to enable a complete cleaning and/or lapping treatment of the external surface 13, in fact drags with it the pad 39 and with the pad 39 all the remaining components of the apparatus for treating rollers 1.

In this manner, after performing a cleaning and/or lapping treatment on a group of rollers 3, the apparatus for treating rollers 1 is moved along the conveying device 2 to perform another cleaning and/or lapping treatment on a further group of rollers 3.

As mentioned before, the comments on the connecting plate 29, the locking means 31 and the lifting means 38 of the first operating zone 47 can be respectively applied to a connecting plate 29', a locking means 31' and a lifting means 38' arranged in the second operating zone 48.

The connecting plate 29, the locking means 31 and the actuating means 40 operate simultaneously on the connecting plate 29', the locking means 31' and the actuating means 40'.

In order to move the apparatus for treating rollers 1 by a set number of rollers 3, sensor means 45 is set up that is shown in Figure 6 and is connected to the connecting plate 29.

Further sensor means 45' can also be set up that is connected to the further connecting plate 29'.

The sensor means 45 can comprise a photoelectric cell 46.

The sensor means 45 is connected to the connecting plate 29 in a zone that is such as to be at and above a roller 3 when the locking wheels 37 are positioned between adjacent pairs of rollers 3.

Alternatively, the sensor means 45 is connected to the connecting plate 29 in a zone that is such as to be at and above a gap 49, when the locking wheels 37 are positioned between pairs of adjacent rollers 3.

The sensor means 45 is able to detect the presence of a roller 3 or the absence thereof, which corresponds to the presence of a gap 49.

For example, the sensor means 45 can detect a degree of luminosity: the presence of a roller 3 corresponds to the luminosity below a threshold value, whereas the presence of a gap 49 corresponds to luminosity above a threshold value. In particular, when the rollers 3 are rotated and both the pistons 42 of the actuating means 40 and the pistons 42' of the actuating means 40' are taken to the extended configuration, and thus the apparatus for treating rollers 1 can be moved, dragged by the rotary movement of the rollers 3, the sensor means 45, and, if present, the sensor means 45', detect the movement of the apparatus 1 along the conveying device 2, detecting the number of rollers 3, or of gaps 49, that pass below said sensor means 45, 45' during movement of the apparatus 1.

When the size of the movement reaches a set value, depending on the number of rollers that the cleaning tool 19 can treat simultaneously, the sensor means 45, 45' commands the return of the pistons 42 and 42' to the retracted configuration R, in such a manner that the locking wheels 37 are again inserted between pairs of adjacent rollers 3, locking the apparatus 1 in a new working position.

The apparatus for treating rollers 1 further comprises a management and control unit 50 provided with a programmable logic controller (or programmable logic controller, i.e. PLC) that runs a programme and processes the digital and analogue signals coming from the sensor means 45 (and possibly 45'). The management and control unit 50 further controls the operation of the cleaning means 8, of the first driving means 18a, of the second driving means 18b, of the actuating means 40, of the further actuating means 40' and of the movement means 43.

In order to encourage repositioning of the apparatus for treating rollers 1 after the latter has been dragged by the rotation of the rollers 3 for a set portion, the apparatus for treating rollers 1 is provided with a centring pin 51 in the first operating zone 47 (and possibly with a centring pin 51' in the second operating zone 48 that is completely similar to the centring pin 51).

The centring pin 51 is connected to the crosspiece 6 and/or to the further crosspiece 7 at a portion of lower surface 53, shown in Figure 2.

The centring pin 51 is moved between an operating position P, shown, for example, in Figures 1 and 6, and a rest position, which is not shown.

The centring pin 51 is movable by operating means 52 that can comprise one or more cylinders, for example pneumatic cylinders.

The operating means 52 enables the centring pin 51 to take on the rest position when the pistons 42 and 42' are in the extended configuration and enable the centring pin 51 to take on the operating position P whilst the pistons 42 and 42' move from the extended configuration to the retracted configuration R.

In this manner, the centring pin 51 is inserted into a gap 49 preventing, together with the locking wheels 37, the apparatus for treating rollers 1 being dragged further by rotation of the rollers 3.

Operation of the apparatus for treating rollers 1, with the corresponding operating steps, will be disclosed below.

When it is necessary to perform a cleaning and/or lapping treatment on the rollers 3 of the conveying device 2, an operator applies the cleaning tool 19, or another cleaning tool that is suitable for a certain type of treatment, to the supporting head 17.

Afterwards, the apparatus for treating rollers 1 is mounted resting on the rollers 3, near an entry zone to the conveying device 2, with the pads 39 and 39' in a non-operating position in contact with a portion of the external surface 13 of the rollers 3.

The pistons 42 and 42', when the apparatus for treating rollers 1 is arranged on the conveying device 2, are in the extended configuration and the rollers 3 are stationary.

In order to perform the cleaning and/or lapping treatment, the operating means 52 and 52' takes the centring pins 51 and 51', if present, from the rest position to the operating position P, in such a manner as to be inserted into respective gaps 49. Further, the actuating means 40 and 40' take the pistons 42 and 42' from the extended configuration to the retracted configuration R, in such a manner that each locking wheel 37 and 37' is inserted between pairs of adjacent rollers 3. In this manner, the apparatus for treating rollers 1 is locked on the conveying device 2.

The rollers 3 are then each rotated around the rotation axis A and the movement means 43 drives the carriage 6 to move, taking the cleaning means 8 near the first end 11 or the second end 12 of the apparatus for treating rollers 1. The first driving means 18a then moves the supporting head 17 towards the rollers 3 until the cleaning elements 27 contact a portion of the external surface 13 of a part of the rollers 3.

At this point, the cleaning and/or lapping treatment can start.

The cleaning tool 19 is rotated around its rotation axis B by the second driving means 18b and interacts with a portion of the external surface 13 of a part of the rollers 3. The cleaning elements 27 enable the impurities to be eliminated that may be deposited and remain on the external surface of the rollers 3.

After a set cleaning time that depends on the type of treatment to be performed and the rotation speed of the rollers 3, the carriage 6 is moved along the frame 4 parallel to the axes A of the rollers 3, can interact with a further portion of the external surface 13 of each roller 3. The carriage 6 is moved progressively in a direction that is substantially perpendicular from the first end 11 of the apparatus 1 until it reaches the second end 12, or vice versa. In this manner, the cleaning and/or lapping treatment can affect the entire length of the rollers 3.

The cleaning time can be made variable along the external surface 13 in such a manner as to subject to a more intensive treatment some zones of the external surface 13 that are particularly damaged by the impurities.

Further, after treating the entire external surface 13, it is possible that it is desired to perform a further treatment along the entire length of the external surface 13. In this case, the cleaning means 8 is moved from the second end 12 to the first end 11 or vice versa, respectively, performing said further treatment progressively on the external surface 13 of the rollers 3. Once the cleaning and/or lapping treatment on a part of the rollers 3 is terminated, the apparatus for treating rollers 1 has to be translated along the conveying device 2 in order to perform another cleaning and/or lapping treatment on a further part of the rollers 3 of the conveying device 2.

For this purpose, the first driving means 18a moves the cleaning device 19 away from the rollers 3, the actuating means 40 and 40' drive the pistons 42 and 42' to move from the retracted configuration R to the extended configuration and the operating means 52 and 52' drive the centring pins 51 and 51' to move from the operating position P to the rest position. In this manner, the locking wheels 37 are moved away from the rollers 3 and only the pads 39 and 39' contact a part of the rollers 3. The remaining components of the apparatus for treating rollers 1 no longer interact with the rollers 3.

The rollers 3 continue to rotate, dragging with them the apparatus for treating rollers 1.

The apparatus for treating rollers 1 is then moved on the conveying device 2, exploiting the rotary movement of the rollers 3.

The sensor means 45 and 45' detects in succession the presence of a set number of rollers 3 and gaps 49, above which the operating means 52 and 52' returns the centring pins 51 and 51', if present, from the rest position to the operating position P, in such a manner as to be inserted into respective gaps 49. Further, the actuating means 40 and 40' returns the pistons 42 and 42' from the extended configuration to the retracted configuration R, in such a manner that each locking wheel 37 and 37' descends again to be inserted between adjacent pairs of rollers 2, locking the apparatus 1 in a new position along the conveying device 2. In this manner, a new cleaning and/or lapping treatment can take place on a further part of the rollers 3 in the manner disclosed above.

The apparatus for treating rollers 1 is translated along the conveying device 2 in such a manner as to subject all the desired rollers 3 to the cleaning and/or lapping treatment. Owing to the apparatus for treating rollers 1, it is not necessary to extract the rollers in melted silica from the conveying device to subject the rollers in melted silica to cleaning and/or to lapping in order to eliminate the impurities that are deposited on the external surface thereof and thus to improve the quality of the sheets of vitreous material obtained in a kiln for tempering vitreous material.

This enables both routine and extraordinary maintenance operations on the rollers to be performed with significant rapidity.

Further, it is not necessary to provide assigned personnel for these operations.

The maintenance operations of the rollers are further very effective as they are not performed manually by the assigned workers but by the apparatus according to the invention that performs them in complete independence.

The apparatus according to the invention lastly enables the maintenance operations to be performed uniformly along the external surface of the rollers or to be limited more in more damaged zones of the external surface of the rollers.

## Claims

1. Apparatus for treating rollers (1) suitable for subjecting to a maintenance operation rollers (3) of a conveying device (2) for eliminating impurities and encrustations from an external surface (13) of said rollers (3), said apparatus comprising locking means (31; 31') suitable for maintaining said apparatus (1) in a fixed position resting on said conveying device (2) when said rollers (3) are rotated around respective rotating axes (A), said locking means (31, 31') comprising freely rotatable revolving elements (37; 37') that are suitable for being inserted between adjacent pairs of rollers (3), said apparatus further comprising a frame (4), provided with a crosspiece (6), cleaning means (8) provided with a carriage (9), that is movable along said crosspiece (6), with a supporting head (17) and with a cleaning tool (19) that is removably couplable with said supporting head (17), **characterized in that** it comprises lifting means (38; 38') suitable for moving said frame (4) away from said external surface (13) of said rollers (3), said lifting means (38, 38') comprising a pair of pads (39, 39') placed at opposite ends of said frame (4) and actuating means (40, 40') that is suitable for pushing said pads (39, 39') against said external surface (13) to lift said frame (4) with respect to said external surface (13).

2. Apparatus (1) according to claim 1 and further comprising first driving means (18a) arranged for moving said cleaning tool (19) in a direction that is substantially perpendicular to said external surface (13) of said rollers (3) towards and away therefrom, and/or second driving means (18b) arranged for rotating said cleaning tool (19) around a rotation axis (B) to perform said maintenance operation on said rollers (3).

3. Apparatus (1) according to claim 2, wherein said supporting head (17) comprises a tubular body (20), that is couplable with said second driving means (18b), and a supporting plate (21) that is couplable with said cleaning tool (19), said supporting plate (21) being fixed to an end (30) of said tubular body (20).

4. Apparatus (1) according to claim 3, wherein on a lower surface (23) of said supporting plate (21) there is obtained a plurality of seats (22), each arranged for housing a fixing element made of a magnetic material, from said lower surface (23) there projecting centring pins (24), arranged for being inserted into respective housings of said cleaning tool (19) such that said cleaning tool (19) is coaxial with said supporting plate (21).

5. Apparatus (1) according to any one of claims 3 or 4, wherein said cleaning tool (19) comprises a first layer (25) facing said supporting plate (21) and a second layer (26) facing said rollers (3) to be subjected to said maintenance operation, said first layer (25) being made of metal material to be attracted by said fixing elements in magnetic material of said supporting head (17), in said second layer (26) there being arranged a plurality of cleaning elements (27), each cleaning element (27) being partially submerged in said second layer (26) and partially protruding from said second layer (26).

6. Apparatus (1) according to claim 5, wherein each cleaning element (27) comprises at least one edge (28) that protrudes outside said second layer (26) to interact with the external surface (13) of said rollers (3) when said cleaning tool (19) is brought into contact with said external surface (13).

7. Apparatus (1) according to claim 5, or 6, wherein said second layer (26) is made of an elastic material, or comprises a layer of abrasive material.

8. Apparatus (1) according to any one of claims 4 to 7, wherein said magnetic element may have a shape chosen from the group comprising: disc, pad, parallelpipedon.

9. Apparatus (1) according to any preceding claims, wherein said carriage (9) is movable by translating means (10) arranged on said crosspiece (6) between a first end (11) and a second end (12) of said apparatus (1), said first end (11) and said second end (12) being locatable at respective ends of said rollers (3).

10. Apparatus (1) according to claim 9, wherein said translating means (10) comprises a guide (14) that is slidingly couplable on a slide (15) of said carriage (9) and movement means (43) arranged for driving said carriage (9) or for driving said guide (14) in order to translate said carriage (9) on said crosspiece (6).

11. Apparatus (1) according to any preceding claims, wherein said actuating means (40, 40') comprises at least one operating cylinder (41, 41') for each pad (39, 39'), said at least one operating cylinder (41, 41') being provided with a piston (42, 42') that is slidable therein between an extended configuration, wherein it protrudes at least partially outside said operating cylinder (41, 41'), and a retracted configuration (R), wherein it is received inside said operating cylinder (41, 41').

12. Apparatus (1) according to any preceding claims, wherein said locking means (31, 31') comprises, at each end of the frame (4), a bar (33, 33') to which a plurality of pins (44, 44') is fixed around which said freely rotatable revolving elements (37, 37') are free to rotate, part of said pins (44, 44') being movable inside respective slot elements (54) connected to said bar (33).

13. Apparatus (1) according to claim 12, wherein when said at least a piston (42, 42') is in the retracted configuration (R) said locking wheels (37, 37') are inserted between adjacent pairs of rollers (3), locking in position said frame (4) on said conveying device (2) and wherein when said at least a piston (42, 42') is in the extended configuration said locking wheels (37, 37') are spaced apart from said rollers (3) and said pads (39, 39') are in contact with said rollers (3) in such a manner that said apparatus (1) is dragged along the conveying device (2) when said rollers (3) are rotated.

14. Apparatus (1) according to claim 13, and further comprising sensor means (45, 45') arranged for detecting a presence of a roller (3) or of a gap (49) between pairs of adjacent rollers in order to determine a movement of the apparatus (1) along the conveying device (2) and wherein when said movement reaches a preset value, said sensor means commands driving said actuating means (40, 40') for moving said at least a piston (42, 42') from said extended configuration to said retracted configuration (R).

15. Apparatus (1) according to claim 14, and further comprising a management and control unit (50) provided with a programmable logic controller (PLC) for processing signals coming from said sensor means (45, 45') and further controlling operation of said cleaning means (8), of said first driving means (18a), of said second driving means (18b), of said actuating means (40, 40'), of said movement means (43).

16. Apparatus (1) according to any one of claims 3 to 15, wherein inside said tubular body (20) there is housed an elastic element (53) that is suitable for self-levelling the cleaning tool (19) on the external surface (13) of the rollers (3).

17. Apparatus (1) according to any one of claims 3 to 16, and further comprising a compensating device (58) arranged for making uniform a pressure exerted by said cleaning tool (19) on said external surface (13) of said rollers (3).

18. Apparatus (1) according to claim 17, wherein said compensating device comprises an oscillating bush (58) arranged outside a first bush (57) that supports the second driving means (18b) and inside which said tubular body (20) is rotatingly coupled.

## Patentansprüche

1. Vorrichtung zum Behandeln von Rollen (1), die dafür geeignet ist, Rollen (3) einer Fördereinrichtung (2) einer Wartungsmaßnahme zu unterwerfen, um Unreinheiten und Verkrustungen von einer äußeren Oberfläche (13) der Rollen (3) zu entfernen, die Vorrichtung mit Verriegelungsmitteln (31; 31'), die dafür ausgebildet sind, die Vorrichtung (1) in einer fixierten Position zu halten, in der sie auf der Fördereinrichtung (2) ruht, wenn sich die Rollen (3) um entsprechende Rotationsachsen (A) drehen, die Verriegelungsmittel (31; 31') mit frei rotierenden, sich umdrehenden Elementen (37; 37'), die dafür ausgebildet sind, zwischen aneinandergrenzenden Paaren von Rollen (3) eingeführt zu werden, die Vorrichtung ferner mit einem Rahmen (4) ausgestattet mit einem Kreuzstück (6), Reinigungsmitteln (8), die mit einem Fahrelement (9) ausgestattet sind, das entlang des Kreuzstücks (6) bewegbar ist, mit einem Trägerkopf (17) und mit einem Reinigungswerkzeug (19), das lösbar mit dem Trägerkopf (17) verbindbar ist, **dadurch gekennzeichnet, dass** sie Hebemittel (38; 38') aufweist, die dafür geeignet sind, den Rahmen (4) von der externen Oberfläche (13) der Rollen (3) weg zu bewegen, die Hebemittel (38; 38') mit einem Paar von Pads (39, 39'), die an gegenüberliegenden Enden des Rahmens (4) angeordnet sind, und Betätigungsmitteln (40, 40'), die dafür geeignet sind, die Pads (39, 39') gegen die externe Oberfläche (13) zu drücken, um den Rahmen bezogen auf die äußere Oberfläche (13) zu heben.

2. Vorrichtung (1) nach Anspruch 1 und ferner mit ersten Antriebsmitteln (18a), die dafür ausgebildet sind, das Reinigungswerkzeug (19) in einer Richtung zu bewegen, die im Wesentlichen senkrecht zu der externen Oberfläche (13) der Rollen (3) steht, und zwar auf diese zu und von diesen weg, und/oder zweite Antriebsmitteln (18b), die dafür ausgebildet sind, das Reinigungswerkzeug (19) um eine Rotationsachse (B) zu drehen, um die Wartungsmaßnahme an den Rollen (3) durchzuführen.

3. Vorrichtung (1) nach Anspruch 2, wobei der Trägerkopf (17) einen röhrenförmigen Körper (20) aufweist, der mit den zweiten Antriebsmitteln (18b) gekoppelt werden kann, und eine Trägerplatte (16), die mit dem Reinigungswerkzeug (19) gekoppelt werden kann, wobei die Trägerplatte (21) an einem Ende (30) des röhrenförmigen Körpers (20) angeordnet ist.

4. Vorrichtung (1) nach Anspruch 3, wobei an einer unteren Oberfläche (23) der Trägerplatte (21) eine Vielzahl von Sitzen (22) angeordnet ist, wobei jeder dafür ausgebildet ist, ein Fixierelement aufzunehmen, das aus einem magnetischen Material gefertigt ist, wobei von der unteren Oberfläche (23) Zentrierstifte (24) daraus hervorstehen, die dafür ausgebildet sind, um in entsprechende Aufnahmen des Reinigungswerkzeugs (19) eingeführt zu werden, so dass das Reinigungswerkzeug (19) koaxial zu der Trägerplatte (21) ist.

5. Vorrichtung (1) nach einem der Ansprüche 3 oder 4, wobei das Reinigungswerkzeug (19) eine erste Schicht (25) aufweist, die der Trägerplatte (21) zugewandt ist, und eine zweite Schicht (26), die den Rollen (3) zugewandt sind, die der Wartungsmaßnahme unterworfen werden sollen, wobei die erste Schicht (25) aus einem metallischen Material gefertigt ist, das von den Fixierelementen aus magnetischem Material des Trägerkopfs (17) angezogen werden kann, wobei in der zweiten Schicht (26) eine Vielzahl von Reinigungselementen (27) angeordnet ist, wobei jedes Reinigungselement (27) teilweise in der zweiten Schicht (26) versenkt ist und teilweise aus der zweiten Schicht (26) hervorsteht.

6. Vorrichtung (1) nach Anspruch 5, wobei jedes Reinigungselement (27) zumindest eine Kante (28) aufweist, die außerhalb der zweiten Schicht (26) hervorsteht, um mit der externen Oberfläche (13) der Rollen (3) zusammenzuwirken, wenn das Reinigungswerkzeug (19) in Kontakt mit der externen Oberfläche (13) gebracht ist.

7. Vorrichtung (1) nach Anspruch 5 oder 6, wobei die zweite Schicht (26) aus einem elastischen Material gefertigt ist, oder eine Schicht aus einem abrasiven Material aufweist.

8. Vorrichtung (1) nach einem der Ansprüche 4 bis 7, wobei das magnetische Element eine Form haben kann, die gewählt ist aus der Gruppe aufweisend: eine Scheibe, ein Pad, ein Parallelepiped.

9. Vorrichtung (1) nach einem der vorhergehenden Ansprüche, wobei das Fahrelement (9) durch Verlagerungsmittel (10) bewegbar ist, die an dem Kreuzstück (6) angeordnet sind, und zwar zwischen einem ersten Ende (11) und einem zweiten Ende (12) der Vorrichtung (1), wobei das erste Ende (11) und das zweite Ende (12) an entsprechenden Enden der Rollen (3) lokalisiert werden können.

10. Vorrichtung (1) nach Anspruch 9, wobei die Verlagerungsmittel (10) ein Führungselement (14) aufweisen, das gleitend mit einem Gleitelement (15) des Fahrelements (9) verbindbar ist, und Bewegungsmitteln (43), die dafür ausgebildet sind, das Fahrelement (9) anzutreiben, oder das Führungselement (14) anzutreiben, um das Fahrelement (9) auf dem Kreuzstück (6) zu verlagern.

11. Vorrichtung (1) nach einem der vorhergehenden Ansprüche, wobei die Betätigungsmittel (40, 40') zumindest einen Betriebszylinder (41, 41') für jedes Pad (39, 39') aufweisen, wobei der zumindest eine Betriebszylinder (41, 41') mit einem Kolben ausgestattet ist, der dort hineingleiten kann, und zwar zwischen einer ausgefahrenen Stellung, in der er zumindest teilweise aus dem Betriebszylinder (41, 41') hervorsteht, und einer eingefahrenen Stellung (R), in der er innerhalb des Betriebszylinders (41, 41') aufgenommen ist.

12. Vorrichtung (1), nach einem der vorhergehenden Ansprüche, wobei die Verriegelungsmittel (31; 31') an jedem Ende des Rahmens (4) einen Balken (33, 33') aufweisen, an denen eine Vielzahl von Stiften (44, 44') angeordnet ist, um die sich die frei rotierbaren, sich umdrehenden Elemente (37, 37') frei drehen können, wobei sich ein Teil der Stifte (44, 44') innerhalb entsprechender Schlitzelemente (54) bewegen kann, die mit dem Balken (33) verbunden sind.

13. Vorrichtung (1) nach Anspruch 12, wobei, wenn sich der zumindest eine Kolben (42, 42') in der eingefahrenen Stellung (R) befindet, die Verriegelungsräder (37; 37') zwischen benachbarte Paare von Rollen (3) eingeführt werden und den Rahmen (4) auf der Fördereinrichtung (2) in einer Position verriegeln, und wobei, wenn sich der zumindest eine Kolben (42, 42') in der ausgefahrenen Stellung befindet, die Verriegelungsräder (37; 37') von den Rollen (3) beabstandet sind und sich die Pads (39, 39') in Kontakt mit den Rollen (3) in einer solchen Art und Weise befinden, dass die Vorrichtung (1) entlang der Fördereinrichtung (2) gezogen wird, wenn sich die Rollen (3) drehen.

14. Vorrichtung (1) nach Anspruch 13, und ferner mit Sensormitteln (45, 45'), die dafür ausgebildet sind, eine Präsenz einer Rolle (3) oder einer Lücke (49) zwischen Paaren von benachbarten Rollen zu detektieren, um eine Bewegung der Vorrichtung (1) entlang der Fördereinrichtung (2) zu bestimmen, und wobei, wenn die Bewegung einen vorgegebenen Wert erreicht, die Sensormittel das Antreiben der Betätigungsmittel (40, 40') befehlen, um den zumindest einen Kolben (42, 42') von der ausgefahrenen Stellung in die eingefahrene Stellung (R) zu bewegen.

15. Vorrichtung (1) nach Anspruch 14, und ferner mit einer Management- und Steuereinheit (50), die mit einer programmierbaren logischen Steuerung (PLC) zum Verarbeiten von Signalen ausgestattet sind, die von den Sensormitteln (45, 45') kommen, und ferner zum Steuern des Betriebs der Reinigungsmittel (8), der ersten Antriebsmittel (18a), der zweiten Antriebsmittel (18b), der Betätigungsmittel (40, 40'), der Bewegungsmittel (43).

16. Vorrichtung (1) nach einem der Ansprüche 3 bis 15, wobei innerhalb des röhrenförmigen Körpers (20) ein elastisches Element (53) aufgenommen ist, das dafür geeignet ist, das Reinigungswerkzeug (19) auf der externen Oberfläche (13) der Rollen (3) selbsttätig auszurichten.

17. Vorrichtung (1) nach einem der Ansprüche 3 bis 16, und ferner mit einer Kompensationseinrichtung (58), die dafür ausgebildet ist, einen gleichförmigen Druck zu machen, der von dem Reinigungswerkzeug (19) auf die externe Oberfläche (13) der Rollen (3) ausgeübt wird.

18. Vorrichtung (1) nach Anspruch 17, wobei die Kompensationseinrichtung eine oszillierende Buchse (58) hat, die außerhalb einer ersten Buchse (57) angeordnet ist, die die zweiten Antriebsmittel (18b) trägt, und innerhalb derer der röhrenförmige Körper (20) rotierbar gekoppelt ist.

## Revendications

1. Appareil de traitement de rouleaux (1), convenant pour soumettre à une opération de maintenance des rouleaux (3) d'un dispositif de convoyage (2) afin d'éliminer des impuretés et des incrustations d'une surface externe (13) desdits rouleaux (3), ledit appareil comprenant des moyens de verrouillage (31, 31') prévus pour maintenir ledit appareil (1) dans une position fixe en appui sur ledit dispositif de convoyage (2) lorsque lesdits rouleaux (3) sont entraînés en rotation autour d'axes de rotation respectifs (A), lesdits moyens de verrouillage (31, 31') comprenant des éléments de révolution (37, 37') capables de tourner librement et qui sont prévus pour être insérés entre des paires de rouleaux (3) adjacentes, ledit appareil comprenant en outre une armature (4), dotée d'un élément transversal (6), des moyens de nettoyage (8) prévus avec un chariot (9) qui est mobile le long dudit élément transversal (6), avec une tête de support (17) et avec un outil de nettoyage (19) qui peut être couplé de manière démontable à ladite tête de support (17), **caractérisé en ce qu'**il comprend des moyens de levage (38, 38') aptes à déplacer ladite armature (4) pour l'éloigner de ladite surface externe (13) desdits rouleaux (3), lesdits moyens de levage (38, 38') comprenant une paire de coussinets (39, 39') placés à des extrémités opposées de ladite armature (4) et des moyens d'actionnement (40, 40') qui sont prévus pour pousser lesdits coussinets (39, 39') contre ladite surface externe (13) pour soulever ladite armature (4) par rapport à ladite surface externe (13).

2. Appareil (1) selon la revendication 1, et comprenant en outre des premiers moyens d'entraînement (18a) organisés pour déplacer ledit outil de nettoyage (19) dans une direction qui est sensiblement perpendiculaire à ladite surface externe (13) desdits rouleaux (3), vers ceux-ci et en s'en éloignant, et/ou des deuxièmes moyens d'entraînement (18b) organisés pour faire tourner ledit outil de nettoyage (19) autour d'un axe de rotation (B) afin de réaliser ladite opération de maintenance sur lesdits rouleaux (3).

3. Appareil (1) selon la revendication 2, dans lequel ladite tête de support (17) comprend un corps tubulaire (20), qui peut être couplé auxdits deuxièmes moyens d'entraînement (18b), et une plaque de support (21), qui peut être couplée audit outil de nettoyage (19), ladite plaque de support (21) étant fixée à une extrémité (30) dudit corps tubulaire (20).

4. Appareil (1) selon la revendication 3, dans lequel il a été prévu sur une surface inférieure (23) de ladite plaque de support (21) une pluralité de logements (22), chacun d'eux étant organisé pour loger un élément de fixation réalisé en un matériau magnétique, et des ergots de centrage (24), qui sont en saillie à partir de ladite surface inférieure (23) et sont organisés pour être insérés dans des évidements respectifs dudit outil de nettoyage (19) de telle manière que ledit outil de nettoyage (19) soit coaxial avec ladite plaque de support (21).

5. Appareil (1) selon l'une quelconque des revendications 3 ou 4, dans lequel ledit outil de nettoyage (19) comprend une première couche (25) faisant face à ladite plaque de support (21) et une deuxième couche (26) faisant face auxdits rouleaux (3) devant être soumis à ladite opération de maintenance, ladite première couche (25) étant réalisée en un matériau métallique afin d'être attirée par lesdits éléments de fixation en matériau magnétique de ladite tête de support (17), et une pluralité d'éléments de nettoyage (27) étant disposés dans ladite deuxième couche (26), chaque élément de nettoyage (27) étant partiellement enfoncé dans ladite deuxième couche (26) et partiellement saillante à partir de ladite deuxième couche (26).

6. Appareil (1) selon la revendication 5, dans lequel chaque élément de nettoyage (27) comprend au moins une arête (28) qui est saillante vers l'extérieur de ladite deuxième couche (26) afin d'interagir avec la surface externe (13) desdits rouleaux (3) lorsque ledit outil de nettoyage (19) est amené au contact de ladite surface externe (13).

7. Appareil (1) selon la revendication 5 ou 6, dans lequel ladite deuxième couche (26) est réalisée en un matériau élastique, ou bien comprend une couche de matériau abrasif.

8. Appareil (1) selon l'une quelconque des revendications 4 à 7, dans lequel ledit élément magnétique peut avoir une forme choisie dans le groupe comprenant les suivantes : disque, coussinet, parallélépipède.

9. Appareil (1) selon l'une quelconque des revendications précédentes, dans lequel ledit chariot (9) est déplaçable à l'aide de moyens de translation (10) prévus sur ledit élément transversal (6) entre une première extrémité (11) et une deuxième extrémité (12) dudit appareil (1), ladite première extrémité (11) et ladite deuxième extrémité (12) étant localisées aux extrémités respectives desdits rouleaux (3).

10. Appareil (1) selon la revendication 9, dans lequel lesdits moyens de translation (10) comprennent un élément de guidage (14), qui peut être couplé en coulissant sur une glissière (15) dudit chariot (9), et des moyens de déplacement (43) organisés pour entraîner ledit chariot (9) ou pour entraîner ledit élément de guidage (14) afin de déplacer en translation ledit chariot (9) sur ledit élément transversal (6).

11. Appareil (1) selon l'une quelconque des revendications précédentes, dans lequel lesdits moyens d'actionnement (40, 40') comprennent au moins un cylindre de fonctionnement (41, 41') pour chaque coussinet (39, 39'), ledit au moins un cylindre de fonctionnement (41, 41') étant équipé d'un piston (42, 42') qui peut y coulisser entre une configuration déployée, dans laquelle il sort au moins partiellement dudit cylindre de fonctionnement (41, 41'), et une configuration rétractée (R), dans laquelle il est logé à l'intérieur dudit cylindre de fonctionnement (41, 41').

12. Appareil (1) selon l'une quelconque des revendications précédentes, dans lequel lesdits moyens de verrouillage (31, 31') comprennent, à chaque extrémité de l'armature (4), un barreau (33, 33') auquel sont fixées une pluralité de tiges (44, 44') autour desquelles lesdits éléments de révolution (37, 37') capables de tourner librement sont libres en rotation, une partie desdites tiges (44, 44') étant mobile à l'intérieur d'éléments (54) à rainure reliés audit barreau (33).

13. Appareil (1) selon la revendication 12, dans lequel, lorsque ledit au moins un piston (42, 42') est dans sa configuration rétractée (R), lesdites roues de verrouillage (37, 37') sont insérées entre des paires de rouleaux (3) adjacentes, verrouillant ainsi la position de ladite armature (4) sur ledit dispositif de convoyage (2), et, lorsque ledit au moins un piston (42, 42') est dans sa configuration déployée, lesdites roues de verrouillage (37, 37') sont écartées desdits rouleaux (3) et lesdits coussinets (39, 39') sont en contact avec lesdits rouleaux (3) de telle manière que ledit appareil (1) est entraîné le long du dispositif de convoyage (2) lorsque lesdits rouleaux (3) sont entraînés en rotation.

14. Appareil (1) selon la revendication 13, et comprenant en outre des moyens de détection (45, 45') prévus pour détecter la présence d'un rouleau (3) ou un interstice (49) entre des paires de rouleaux adjacents afin de déterminer l'existence d'un mouvement de l'appareil (1) le long du dispositif de convoyage (2), et, lorsque ledit mouvement atteint une valeur préréglée, lesdits moyens de détection commandent l'entraînement desdits moyens d'actionnement (40, 40') afin de faire venir ledit au moins un piston (42, 42') de ladite configuration déployée dans ladite configuration rétractée (R).

15. Appareil (1) selon la revendication 14, et comprenant en outre une unité de gestion et de commande (50) dotée d'un contrôleur logique programmable (PLC) afin de traiter les signaux provenant desdits moyens de détection (45, 45') et, en outre, de commander le fonctionnement desdits moyens de nettoyage (8), desdits premiers moyens d'entraînement (18a), desdits deuxièmes moyens d'entraînement (18b), desdits moyens d'actionnement (40, 40'), et desdits moyens de déplacement (43).

16. Appareil (1) selon l'une quelconque des revendications 3 à 15, dans lequel il est prévu un élément élastique (53) logé à l'intérieur dudit corps tubulaire (20) et qui est apte à réaliser un auto-nivellement de l'outil de nettoyage (19) sur la surface externe (13) des rouleaux (3).

17. Appareil (1) selon l'une quelconque des revendications 3 à 16, et comprenant en outre un dispositif de compensation (58) prévu pour rendre uniforme la pression exercée par ledit outil de nettoyage (19) sur ladite surface externe (13) desdits rouleaux (3).

18. Appareil (1) selon la revendication 17, dans lequel ledit dispositif de compensation comprend une bague oscillante (58) disposée autour d'une première bague (57) qui porte les deuxièmes moyens d'entraînement (18b) et à l'intérieur de laquelle ledit corps tubulaire (20) est entraîné en rotation par couplage.
